# FASCICULE DE BREVET EUROPEEN

(11) **EP 3 835 510 B1**
(45) Date de publication et mention de la délivrance du brevet: **03.07.2024**
(21) Numéro de dépôt: 20212764.3
(22) Date de dépôt: 09.12.2020
(51) Int. Cl.: E04F 11/18, F16B 2/10, F16B 7/04, F16B 7/18

(54) **DISPOSITIF DE MAIN COURANTE POUR GARDE-CORPS**
HANDLAUFVORRICHTUNG FÜR GELÄNDER
HANDRAIL DEVICE FOR A RAILING

(30) Priorité: 11.12.2019 FR 1914127
(43) Date de publication de la demande: 16.06.2021
(73) Titulaire: DANI ALU, 69280 Sainte Consorce (FR)
(72) Inventeur: DUPLAT, Bruno, 69340 Francheville (FR); VIVIER, Gaëlle, 69009 Lyon (FR)
(74) Mandataire: Germain Maureau

(56) Documents cités:
- EP-A2- 2 636 815
- FR-A5- 2 206 771
- US-A- 2 068 902
- US-A- 3 784 023
- US-A- 4 007 918

## Description

### [Domaine technique]

L'invention se rapporte à un dispositif de main courante pour garde-corps.

Elle se rapporte plus particulièrement à un dispositif de main courante comprenant une lisse prévue pour former une main courante et un étrier prévu pour une fixation de la lisse sur un montant, et plus précisément sur une extrémité supérieure (ou haute) du montant.

Un garde-corps s'étend généralement le long des bordures de terrasse ou de toiture, ou le long d'une zone d'accès limité, et comprend une succession de montants fixés sur un ouvrage au moyen de sabots.

Il est également d'usage de prévoir entre les montants une ou plusieurs lisses, autrement appelées barres ou barreaux, comme par exemple une lisse haute rapportée au niveau des extrémités supérieures libres respectives des montants et formant une main courante et éventuellement une ou plusieurs lisses basses ou intermédiaires disposées sous la main courante.

### [Etat de la technique antérieure]

Les mains courantes sont classiquement prévues pour être saisies à pleine main afin d'assurer le maintien de son équilibre et faciliter la progression, et sont aussi bien évidement prévues pour former une barrière supérieure assurant la protection afin d'éviter toute chute accidentelle ou accès accidentel à une zone dangereuse.

Pour permettre une fixation d'une lisse formant main courante sur une extrémité supérieure d'un montant, plusieurs types d'étrier sont connus, notamment des documents EP2159344, EP2636815 et FR2915500. Cependant, ces étriers de l'état de la technique présentent l'inconvénient d'envelopper ou de serrer la lisse en grande partie sur sa portion supérieure, c'est-à-dire sur le dessus de la lisse là où on pose la main, de sorte que l'étrier gêne le passage de la main.

L'état de la technique peut également être illustré par les enseignements du document US 4 007 918 qui propose un dispositif de main courante pour garde-corps, comprenant une lisse prévue pour former une main courante et une portion de support prévu pour une fixation de la lisse sur un montant, où cette portion de support comprend deux bras, dont un bras fixe qui vient de matière avec le montant et un bras détachable solidaire d'une pièce détachable qui est fixé sur le montant par une vis. Avec un tel dispositif de main courante, le montage s'effectue comme suit : la lisse est glissée sur le bras fixe dans une gorge prévue sur le dessous de la lisse, en l'absence du bras détachable, puis la pièce détachable et le bras détachable sont glissés dans une autre gorge avant d'être fixés par la vis. Une telle solution est cependant problématique, car elle nécessite de faire coulisser la lisse sur le bras fixe, puis de faire coulisser le bras détachable dans la lisse, ce qui requiert une disponibilité longitudinale pour ces deux coulissements, ce qui est proprement impossible lorsque le garde-corps est positionné entre deux murs par exemple.

### [Exposé de l'invention]

L'invention vise à répondre en tout ou partie aux problématiques précités, en proposant de fixer une lisse sur un montant tout en laissant la portion supérieure de la lisse continue, afin de ne pas gêner le passage d'une main qui glisserait sur cette lisse. Un autre but de l'invention est de permettre la fixation de la lisse en tête de montant, centrée sur le montant, autrement dit une fixation de la lisse sur une extrémité supérieure du montant et dans le prolongement du montant.

Un autre but de l'invention est de proposer une fixation de la lisse qui permet de poser et de serrer la lisse, sans avoir à la faire glisser pour faciliter le montage.

Un autre but de l'invention est de proposer une solution qui ne fait appel à aucun usinage (rivetage, perçage ou autre) sur le montant et sur la lisse.

A cette fin, l'invention propose un dispositif de main courante pour garde-corps, comprenant une lisse prévue pour former une main courante et un étrier prévu pour une fixation de la lisse sur un montant,
dans lequel la lisse s'étend selon un axe longitudinal et présente une face périphérique externe pourvue d'une portion inférieure et d'une portion supérieure, et ladite lisse présente deux plans médians qui sont, lorsque la lisse est en situation sur le garde-corps avec l'axe longitudinal à l'horizontal :
   - un premier plan médian incluant l'axe longitudinal et s'étendant verticalement, où la lisse présente une hauteur donnée mesurée dans le premier plan médian entre un point bas sur la portion inférieure et un point haut sur la portion supérieure, et où l'axe longitudinal se situe sensiblement à mi-distance du point haut et du point bas; et
   - un second plan médian au-dessus duquel s'étend la portion supérieure et en-dessous duquel s'étend la portion inférieure, où le second plan médian inclue l'axe longitudinal et s'étend horizontalement, orthogonalement au premier plan médian ;
et dans lequel l'étrier comprend deux mâchoires articulées et est configurable entre une configuration serrée dans laquelle les deux mâchoires enserrent une section de la lisse, et une configuration desserrée permettant l'introduction de la lisse entre les deux mâchoires ;
ledit dispositif de main courante étant remarquable en ce que :
   - la lisse présente deux gorges longitudinales prévues dans la portion inférieure de la face périphérique externe, ces deux gorges longitudinales s'étendant parallèlement à l'axe longitudinal et étant disposées de part et d'autre du premier plan médian, en-dessous du second plan médian ; et
   - l'étrier, en configuration serrée, a ses deux mâchoires engagées au moins partiellement à l'intérieur des deux gorges longitudinales respectives, ces deux mâchoires ne dépassant pas au-dessus du second plan médian

Ainsi, l'invention propose un serrage dans des gorges longitudinales prévues sur le dessous de la lisse, ce qui permet de laisser le dessus de la lisse libre et continu, les mâchoires de l'étrier ne gênant ainsi pas le passage d'une main. Par ailleurs, le montage se fait aisément en posant la lisse sur l'étrier en configuration desserrée, puis en serrant la lisse entre les deux mâchoires.

Il est à noter que, au sens de l'invention, l'axe longitudinal se situe sensiblement à mi-distance du point haut et du point bas signifie que l'axe longitudinal se situe à une distance du point bas comprise entre 0,4 et 0,6 fois la hauteur (distance entre le point bas et le point haut).

Par ailleurs, il est bien évident, au sens de l'invention, que les termes « deux mâchoires » répondent à la définition classique couvrant deux pièces articulées qui peuvent être éloignées ou rapprochées l'une de l'autre afin notamment de saisir ou d'immobiliser un objet, en l'occurrence ici deux mâchoires articulées qui peuvent être éloignées ou rapprochées l'une de l'autre afin de saisir et d'immobiliser la lisse dans ses gorges longitudinales.

Selon une caractéristique, les deux mâchoires comprennent :
- une première mâchoire sur laquelle sont disposés des moyens de fixation prévus pour une fixation sur le montant, de sorte que la première mâchoire est statique ; et
- une seconde mâchoire montée mobile sur la première mâchoire entre la configuration desserrée et la configuration serrée.

Selon une possibilité, la seconde mâchoire est montée mobile en pivotement sur la première mâchoire au moyen d'un organe de liaison définissant un axe de pivotement parallèle à l'axe longitudinal de la lisse.

Selon une autre possibilité, l'étrier comportent des moyens de serrage agencés pour mouvoir la seconde mâchoire entre la configuration desserrée et la configuration serrée et pour maintenir la seconde mâchoire dans la configuration serrée.

Dans une réalisation particulière, les moyens de serrage comprennent :
- un orifice taraudé ménagé dans la première mâchoire,
- un orifice traversant ménagé dans la seconde mâchoire, et
- une vis de serrage présentant, d'une part, une tige filetée traversant ledit orifice traversant et s'engageant par vissage dans ledit orifice taraudé et, d'autre part, une tête venant en butée contre une face postérieure de la seconde mâchoire.

Selon une autre possibilité, la première mâchoire présente :
- un mors de serrage définissant une face interne de serrage prévue pour serrer la lisse en s'engageant au moins partiellement à l'intérieur de l'une des deux gorges longitudinales ; et
- une embase solidaire du mors de serrage et de laquelle fait saillie le mors de serrage, ladite embase définissant une surface inférieure s'étendant parallèlement au second plan médian et prévue pour venir en appui sur une extrémité supérieure du montant. Avantageusement, les moyens de fixation font saillie du dessous de la surface inférieure de l'embase de la première mâchoire et sont prévus pour s'engager à l'intérieur d'une ouverture ménagée dans l'extrémité supérieure du montant.

Ainsi, les moyens de fixation vont permettre de se fixer en tête du montant, de manière centrée sur le montant, c'est-à-dire dans le prolongement du montant.

Dans un mode de réalisation particulier, les moyens de fixation comprennent :
- une première pièce biseautée solidaire de l'embase de la première mâchoire, et
- une seconde pièce biseautée montée coulissante sur l'embase relativement à la première biseautée ;

la première pièce biseautée et la seconde pièce biseautée étant en appui l'une contre l'autre par leurs surfaces inclinées respectives et conformées pour coulisser l'une par rapport à l'autre,
et dans lequel les deux dites pièces biseautées sont reliées entre elles par un moyen d'actionnement apte à entraîner en coulissement ladite seconde pièce biseautée et à la verrouiller en position relativement à la première pièce biseautée afin de maintenir un verrouillage des deux pièces biseautées en force par écartement à l'intérieur de l'ouverture ménagée dans l'extrémité supérieure du montant.

Ainsi, la fixation sur le montant s'effectue au moyen des deux pièces biseautées (ou pièces en forme de coin) qui viennent se serrer à l'intérieur du montant et donc dans le prolongement du montant.

Pour ce faire, les deux pièces biseautées viennent d'une part en appui l'une contre l'autre par leurs surfaces inclinées respectives, et d'autre part en appui contre la paroi interne du montant suite à un coulissement relatif des pièces biseautées le long de leurs surfaces inclinées ; ce coulissement conduisant à un écartement des deux pièces biseautées afin que ces dernières se pressent contre la paroi interne du montant et ainsi se verrouillent en force dans le montant.

Un tel moyen de fixation présente l'avantage de simplifier et de gagner du temps dans le montage/démontage ; l'opération de montage consistant par exemple à simplement positionner les deux pièces biseautées dans le profilé correspondant, sans nécessité de centrage ou indexage, et ensuite à faire coulisser les deux pièces biseautées et à les verrouiller en force à l'intérieur du montant.

Il est à noter que la première pièce biseautée n'est pas une pièce flottante car elle est solidarisée à l'embase de la première mâchoire tandis que la seconde pièce biseautée est apte à coulisser relativement à ladite première pièce biseautée ; ces deux pièces biseautées étant reliées entre elles par le moyen d'actionnement afin de réaliser le verrouillage des deux pièces biseautées dans le montant.

Selon une possibilité, le moyen d'actionnement comprend un orifice fileté ménagé dans la seconde pièce biseautée, et une vis d'actionnement traversant l'embase de la première mâchoire pour coopérer par vissage avec ledit orifice fileté pour déplacer ladite seconde pièce biseautée en coulissement relativement à la première pièce biseautée afin de rapprocher la seconde pièce biseautée de l'embase et ainsi verrouiller les pièces biseautées à l'intérieur de l'ouverture ménagée dans l'extrémité supérieure du montant.

Ainsi, dans cette réalisation, le moyen d'actionnement est réalisé sous la forme d'une vis d'actionnement, où la vis d'actionnement est aisément accessible de l'extérieur; ladite vis d'actionnement présentant une tête de vis faisant saillie à l'extérieur du montant pour un accès facile à un outil de vissage. Autrement dit, une telle réalisation permet d'avoir un moyen d'actionnement aisément accessible de l'extérieur pour permettre un verrouillage simple et rapide des deux pièces biseautées dans le montant.

Cette vis d'actionnement s'étend avantageusement selon l'axe principal du montant (axe principal qui est vertical quand le montant est vertical), de sorte qu'aucune pièce (tel qu'un rivet) ne traverse la paroi du montant.

Dans une réalisation avantageuse, l'embase présente une portion latérale s'étendant en regard de la face postérieure de la seconde mâchoire, de sorte que la vis d'actionnement traverse cette portion latérale pour que la vis d'actionnement et la vis de serrage soient disposés sur un même côté vis-à-vis du premier plan médian.

Ainsi, pour serrer la lisse dans l'étrier et pour fixer l'étrier sur le montant, il suffit d'un outil de vissage qu'on emploie du même côté, la vis de serrage et la vis d'actionnement étant côte à côte, ce qui facilite l'opération et évite les erreurs.

Selon une caractéristique, les deux mâchoires présentent chacune une face interne de serrage se terminant par un crochet propre à s'engager intérieurement dans la gorge longitudinale correspondante de la lisse en configuration serrée.

Selon une autre caractéristique, la portion inférieure de la face périphérique externe de la lisse présente une zone d'appui s'étendant entre les deux gorges longitudinales, ladite zone d'appui venant en appui sur les faces internes de serrage des deux mâchoires en configuration serrée.

Dans une réalisation particulière, les gorges longitudinales sont ménagées de manière symétrique vis-à-vis du premier plan médian.

Selon une possibilité, les gorges longitudinales sont ménagées à une distance prédéfinie, mesurée dans le premier plan médian à partir du point bas, où cette distance est inférieure ou égale à 0,3 fois la hauteur de la lisse.

Ainsi, les gorges longitudinales sont placées de telle manière que les mâchoires seront situées très bas, et ne gêneront donc pas le passage d'une main.

L'invention se rapporte également à un garde-corps comprenant un dispositif de main courante selon l'invention, et au moins un montant muni d'une extrémité supérieure sur laquelle est fixé l'étrier du dispositif de main courante.

Selon une possibilité, l'extrémité supérieure du montant présente une ouverture à l'intérieur de laquelle est fixé l'étrier.

### [Brève description des dessins]

D'autres caractéristiques et avantages de la présente invention apparaîtront à la lecture de la description détaillée ci-après, d'un exemple de mise en oeuvre non limitatif, faite en référence aux figures annexées dans lesquelles :
[Fig 1] est une vue schématique en perspective d'un garde-corps selon l'invention, comprenant un montant sur lequel est fixé un dispositif de main courante selon l'invention, ce dispositif de main courante comprenant un étrier et une lisse serrée dans l'étrier qui est en configuration serrée ;
[Fig 2] est une vue schématique en perspective du garde-corps de la Figure 1, où la lisse est en attente de serrage dans l'étrier qui est en configuration desserrée ;
[Fig 3] est une vue schématique en coupe du garde-corps de la Figure 1, selon un plan de coupe transversal à la lisse, où la lisse est serrée dans l'étrier qui est en configuration serrée ;
[Fig 4] est une vue schématique en coupe du garde-corps de la Figure 1, selon le même plan de coupe que la Figure 3, où la lisse est posée dans l'étrier qui est en configuration desserrée ;
[Fig 5] est une vue schématique en perspective et éclatée du montant et de l'étrier du garde-corps de la Figure 1, sans la lisse ; et
[Fig 6] est une vue schématique en coupe de de la lisse du garde-corps de la Figure 1, selon le même plan de coupe que la Figure 3.

### [Exposé détaillé de modes de réalisation]

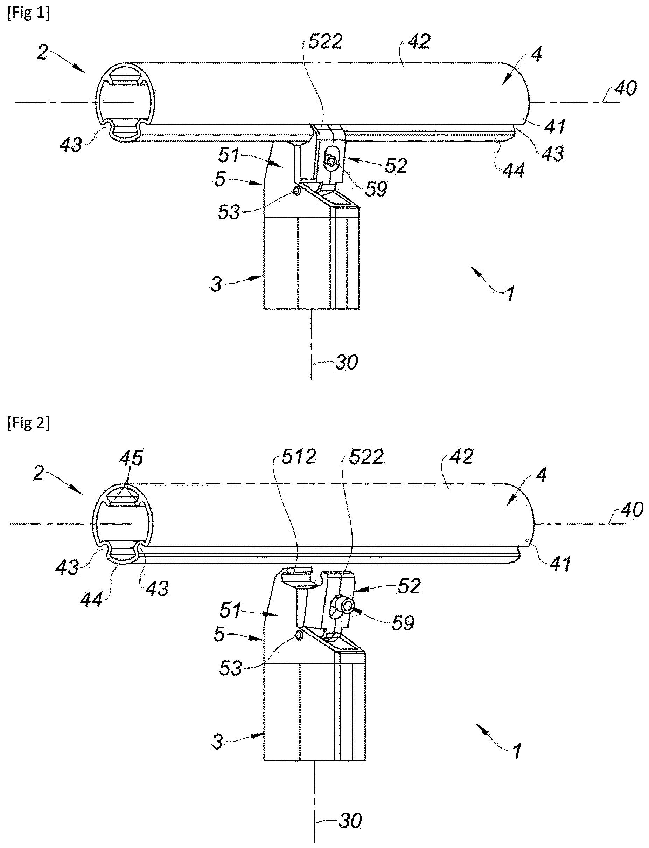

En référence aux Figures 1 à 4, un garde-corps 1 selon l'invention comprend un dispositif de main courante 2 selon l'invention et au moins un montant 3, et de préférence plusieurs montants 3 propres à soutenir le dispositif de main courante 2. Ce dispositif de main courante 2 comprend une lisse 4 prévue pour former une main courante et un étrier 5 prévu pour une fixation de la lisse 4 sur une extrémité supérieure 31 du montant 3, dans le prolongement du montant 3.

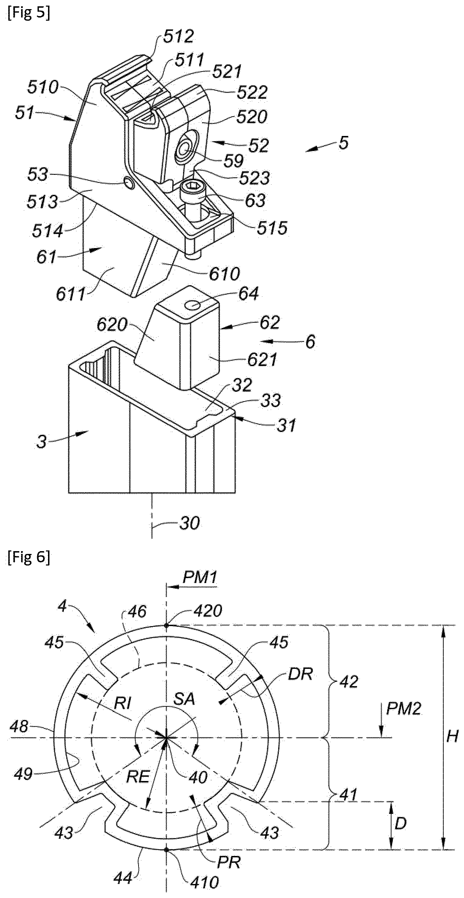

Comme illustré en Figure 5, ce montant 3 se présente sous la forme d'un profilé creux s'étendant selon un axe principal 30 ; cet axe principal 30 étant vertical lorsque le montant 3 est vertical. Le montant 3 est donc de forme tubulaire et ainsi l'extrémité supérieure 31 du montant 3 présente une ouverture 32 à l'intérieur de laquelle est fixé l'étrier 5 ; cette ouverture 32 étant bordée par une bordure périphérique 33 s'étendant dans un plan orthogonal à l'axe principal 30.

En référence à la Figure 6, la lisse 4 s'étend selon un axe longitudinal 40 et se présente par exemple sous la forme d'un profilé, par exemple de section globalement circulaire de diamètre donné.

Cette lisse 4 présente une face périphérique externe 48 pourvue d'une portion inférieure 41 (sur le dessous de la lisse 4) et d'une portion supérieure (sur le dessus de la lisse 4), et cette lisse 4 présente deux plans médians PM1, PM2 qui sont, lorsque la lisse 4 est en situation sur le garde-corps 1 avec l'axe longitudinal 40 à l'horizontal (autrement dit lorsque la lisse 4 est horizontale) :
- un premier plan médian PM1 incluant l'axe longitudinal 40 et s'étendant verticalement, où la lisse 4 présente une hauteur H donnée mesurée dans le premier plan médian PM1 entre un point bas 410 sur la portion inférieure 41 et un point haut 420 sur la portion supérieure 42, et où l'axe longitudinal 40 se situe à mi-distance du point haut 410 et du point bas 420 ; et
- un second plan médian PM2 au-dessus duquel s'étend la portion supérieure 42 et en-dessous duquel s'étend la portion inférieure 41, où le second plan médian PM2 inclue l'axe longitudinal 40 et s'étend horizontalement, orthogonalement au premier plan médian PM1.

Il est à noter que la hauteur H correspond au diamètre externe de la lisse 4 dans le cas où la lisse 4 est un profilé de section globalement circulaire. Par ailleurs, la lisse 4 est avantageusement de forme tubulaire et donc creuse intérieurement, celle-ci présentant donc une paroi tubulaire définissant extérieurement la face périphérique externe 48 et intérieurement une face interne 49.

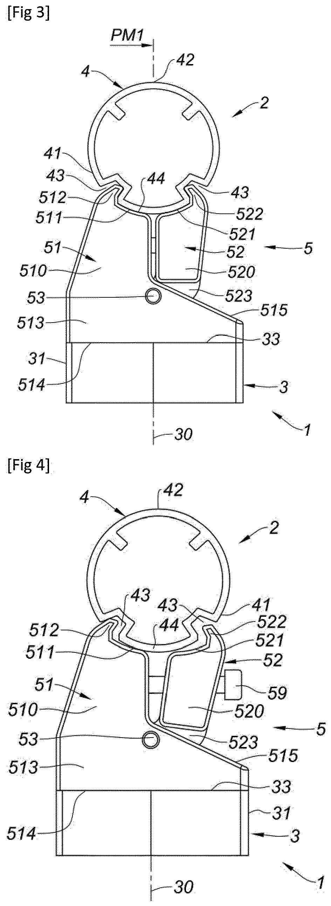

De plus, la lisse 4 présente deux gorges longitudinales 43 prévues dans la portion inférieure 41 de la face périphérique externe 48, ces deux gorges longitudinales 43 s'étendant parallèlement à l'axe longitudinal 40 et étant disposées de part et d'autre du premier plan médian PM1, en-dessous du second plan médian PM2. Les gorges longitudinales 43 sont ménagées de manière symétrique vis-à-vis du premier plan médian PM1. Comme visible en Figure 3, dans la configuration serrée, l'axe principal 30 du montant 3 s'étend dans le premier plan médian PM1, autrement dit la lisse 4 est centrée sur le montant 3.

Comme visible sur la Figure 6, les gorges longitudinales 43 sont ménagées à une distance D prédéfinie, mesurée dans le premier plan médian à partir du point bas 410, où cette distance D est inférieure ou égale à 0,3 fois la hauteur H de la lisse 4, voire inférieure ou égale à 0,25 fois la hauteur H de la lisse 4. Par ailleurs, les gorges longitudinales 43 s'étendent radialement depuis la face interne 49 en direction de l'axe longitudinal 40 sur une profondeur radiale PR donnée.

Il est à noter que la face périphérique externe 48 de la lisse 4 est dépourvue de bosse ou de creux sur un secteur angulaire SA, symétrique par rapport au premier plan médian PM1, de l'ordre de 200 à 260 degrés.

La portion inférieure 41 présente une zone d'appui 44, de forme convexe, s'étendant entre les deux gorges longitudinales 43 ; cette zone d'appui 44 s'étend symétriquement et à cheval sur le premier plan médian PM1.

La lisse 4 présente intérieurement des nervures de renfort interne 45. Les nervures de renfort interne 45 sont au nombre de deux et s'étendent symétriquement de part et d'autre du premier plan médian PM1. Les nervures de renfort interne 45 s'étendent radialement depuis la face interne 49 en direction de l'axe longitudinal 40 sur une distance radiale DR donnée.

Avantageusement et en référence à la Figure 6, la distance radiale DR est équivalente à la profondeur radiale PR, de sorte que la lisse 4 délimite intérieurement un espace creux 46 de forme cylindrique, inscrit entre les gorges longitudinales 43 et les nervures de renfort interne 45, dont le rayon RE est équivalent au rayon interne RI de la lisse 4 moins la profondeur radiale PR, soit RE = RI - PR.

Le ratio RE/RE est supérieur ou égal à 0,5, voire supérieur ou égal à 0,7, et par exemple compris entre 0,7 et 0,8. Ainsi, la lisse 4 procure cet espace creux 46 cylindrique, relativement volumineux, qui va permettre d'introduire intérieurement aux extrémités de la lisse 4 des organes tubulaires de rayon RE, comme par exemple un capot de fermeture ou un organe de liaison angulée qui sert à joindre deux lisses bout à bout avec un angle donné, soit un angle fixe soit un angle ajustable.

L'étrier 5 comprend deux mâchoires 51, 52 et est configurable entre :
- une configuration serrée (visible sur les Figures 1 et 3) dans laquelle les deux mâchoires 51, 52 enserrent une section de la lisse 4, et plus précisément les deux mâchoires 51, 52 sont engagées au moins partiellement à l'intérieur des deux gorges longitudinales 43 respectives, ces deux mâchoires 51, 52 ne dépassant au-dessus des deux gorges longitudinales 43 et donc ne dépassant pas au-dessus du second plan médian PM2 ; et
- une configuration desserrée (visible sur les Figures 2 et 4) dans laquelle les deux mâchoires 51, 52 sont éloignées l'une de l'autre (comparativement à la configuration serrée) permettant l'introduction de la lisse 4 entre les deux mâchoires 51, 52.

Les deux mâchoires 51, 52 articulées comprennent :
- une première mâchoire 51 sur laquelle sont disposés des moyens de fixation 6 (décrits ultérieurement) prévus pour une fixation sur le montant 3, de sorte que la première mâchoire 51 est statique ; et
- une seconde mâchoire 52 montée mobile sur la première mâchoire 51 entre la configuration desserrée et la configuration serrée, et plus précisément montée mobile en pivotement sur la première mâchoire 51 au moyen d'un organe de liaison 53 définissant un axe de pivotement parallèle à l'axe longitudinal 40 de la lisse 4.

La première mâchoire 51, qui est la mâchoire statique, présente :
- un mors de serrage 510 définissant une face interne de serrage 511 prévue pour serrer la lisse 4 en s'engageant au moins partiellement à l'intérieur de l'une des deux gorges longitudinales 43, où cette face interne de serrage 511 se termine par un crochet 512 propre à s'engager intérieurement dans cette gorge longitudinale 43 en configuration serrée ; et
- une embase 513 solidaire du mors de serrage 510 et de laquelle fait saillie le mors de serrage 510, cette embase 513 définissant une surface inférieure 514 s'étendant parallèlement au second plan médian PM2 et prévue pour venir en appui sur l'extrémité supérieure 31 du montant 3, et plus précisément en appui sur toute la bordure périphérique 33 délimitant l'ouverture 32.

Le mors de serrage 510 et l'embase 513 sont solidaires l'un de l'autre, et sont par exemple réalisés d'un seul tenant.

La seconde mâchoire 52, qui est la mâchoire mobile, présente :
- un mors de serrage 520 définissant une face interne de serrage 521 prévue pour serrer la lisse 4 en s'engageant au moins partiellement à l'intérieur de l'autre des deux gorges longitudinales 43, où cette face interne de serrage 521 se termine par un crochet 522 propre à s'engager intérieurement dans cette autre gorge longitudinale 43 en configuration serrée ; et
- un charnon 523 solidaire du mors de serrage 520 et qui est traversé par l'organe de liaison 53 pour autoriser le pivotement de la seconde mâchoire 52.

Il est à noter que, comme visible sur la Figure 3, la zone d'appui 44 de la lisse 4 vient en appui sur les faces internes de serrage 511, 521 des deux mâchoires 51, 52 en configuration serrée.

L'étrier 5 comporte des moyens de serrage agencés pour mouvoir la seconde mâchoire 52 entre la configuration desserrée et la configuration serrée et pour maintenir la seconde mâchoire 52 dans la configuration serrée.

A cet effet, ces moyens de serrage comprennent :
- un orifice taraudé ménagé dans la première mâchoire 51, et plus précisément dans le mors de serrage 510 de la première mâchoire 51, en-dessous de la face interne de serrage 511 ;
- un orifice traversant ménagé dans la seconde mâchoire 52, et plus précisément dans le mors de serrage 520 de la seconde mâchoire 52, en-dessous de la face interne de serrage 521, cet orifice traversant débouchant d'un côté en face de l'orifice taraudé et débouchant de l'autre côté dans une face postérieure du mors de serrage 520 de la seconde mâchoire 52 ;
- une vis de serrage 59 présentant, d'une part, une tige filetée traversant cet orifice traversant et s'engageant par vissage dans cet orifice taraudé ménagé dans la première mâchoire 51 et, d'autre part, une tête venant en butée contre la face postérieure du mors de serrage 520 de la seconde mâchoire 52.

Ainsi, en partant de la position desserrée, il suffit de serrer la vis de serrage 59 pour que sa tête vienne en butée contre le pourtour de l'orifice traversant, et imprime un effort de rotation sur la seconde mâchoire 52 jusqu'à serrage de la lisse 4 entre les deux mâchoires 51, 52.

Il est par ailleurs à noter que, dans la position desserrée, la vis de serrage 59 maintient la seconde mâchoire 52 dans la position desserrée, évitant à celle-ci de basculer sous son propre poids, permettant ainsi de poser la lisse 4 entre les deux mâchoires 51, 52 sans que celle-ci ne risque de chuter, comme visible sur la Figure 4.

En effet, dans la position desserrée illustrée sur la Figure 4, on note que les deux mâchoires 51, 52 définissent une sorte de canal en forme de « U » bordé à droite et à gauche par les crochets 512, 522, ce qui permet l'introduction de la lisse 4 tout en empêchant sa chute.

Les moyens de fixation 6, qui servent à la fixation de l'étrier 5 sur l'extrémité supérieure 31 du montant 3, font saillie du dessous de la surface inférieure 514 de l'embase 513 de la première mâchoire 51 et sont prévus pour s'engager à l'intérieur de l'ouverture 32 ménagée dans l'extrémité supérieure 31 du montant 3.

Plus précisément, et en référence à la Figure 5, ces moyens de fixation 6 comprennent :
- une première pièce biseautée 61 solidaire de l'embase 513 de la première mâchoire 51, et
- une seconde pièce biseautée 62 montée coulissante sur l'embase 513 relativement à la première biseautée 61.

La première pièce biseautée 61 et la seconde pièce biseautée 62 présentent respectivement des surfaces inclinées 610, 620 antagonistes et planes de sorte que, en situation sur le montant 3, la première pièce biseautée 61 et la seconde pièce biseautée 62 sont en appui l'une contre l'autre par leurs surfaces inclinées 610, 620 respectives et sont conformées pour coulisser l'une par rapport à l'autre et pour être verrouillées en force par écartement à l'intérieur du montant 3.

Selon une possibilité, la première pièce biseautée 61 et l'embase 513 sont réalisées d'un seul tenant. La première pièce biseautée 61 s'étend selon une direction parallèle à l'axe principal 30 du montant 3 et sa surface inclinée 610 est non parallèle à cet axe principal 30 en étant orientée dans le sens de la diminution de l'épaisseur de ladite première pièce biseautée 61 en s'éloignant de l'embase 513. Autrement dit, la première pièce biseautée 61 est plus large ou épaisse au niveau de l'embase 513 qu'au niveau de son extrémité libre.

La seconde pièce biseautée 62 présente sa surface inclinée 620 en appui contre la surface inclinée 610 de la première pièce biseautée 61, où cette seconde pièce biseautée 62 est apte à coulisser par rapport à la première pièce biseautée 61 le long de leurs surfaces inclinées 610, 620 respectives.

Le coulissement de la seconde pièce biseautée 62 relativement à la première pièce biseautée 61 conduit à la diminution ou à l'augmentation des dimensions transversales (dimensions mesurées dans un plan orthogonal à l'axe principal 30) de l'ensemble formée par ces deux pièces biseautées 61, 62, suivant le sens de coulissement. En l'occurrence, l'éloignement de la seconde pièce biseautée 62 vis-à-vis de l'embase 513 conduit à une diminution desdites dimensions transversales, afin par exemple de permettre l'insertion desdites pièces biseautées 61, 62 à l'intérieur du montant 3.

A l'inverse, le rapprochement de la seconde pièce biseautée 62 vis-à-vis de l'embase 513 conduit à une augmentation desdites dimensions transversales, afin de serrer les deux dites pièces biseautées 61, 62 par écartement à l'intérieur du montant 3.

Les deux pièces biseautées 61, 62 présentent chacun une surface latérale externe 611, 621 de forme sensiblement complémentaire à la forme interne du montant 3 creux, afin d'épouser au mieux la paroi interne du montant 3 lorsqu'elles sont pressées contre ladite paroi interne du montant 3 pour verrouiller en force l'étrier 5 dans le montant 3. Dans l'exemple illustré sur la Figure 5, le montant 3 étant de section rectangulaire, les deux pièces biseautées 61, 62 présentent chacun une surface latérale externe 611, 621 sensiblement rectangulaire.

Pour permettre le déplacement de la seconde pièce biseautée 62 et le verrouillage de cette seconde pièce biseautée 62 dans une position de serrage à l'intérieur du montant 3, les deux pièces biseautées 61, 62 sont reliées entre elles par un moyen d'actionnement apte à entraîner en coulissement la seconde pièce biseautée 62 et à la verrouiller en position relativement à la première pièce biseautée 61 afin de maintenir un verrouillage des deux pièces biseautées 61, 62 en force par écartement à l'intérieur de l'ouverture 62 ménagée dans l'extrémité supérieure 31 du montant 3.

Ce moyen d'actionnement comprend une vis d'actionnement 63 traversant l'embase 513 et coopérant par vissage avec un orifice fileté 64 ménagé dans la seconde pièce biseautée 62 et s'étendant selon une direction parallèle à l'axe principal 30.

A cet effet, l'embase 513 présente une portion latérale 515 s'étendant en regard de la face postérieure du mors de serrage 520 de la seconde mâchoire 52, de sorte que la vis d'actionnement 63 traverse cette portion latérale 515 selon une direction parallèle à l'axe principal 30. Ainsi, la seconde mâchoire 52 est intercalée entre le mors de serrage 510 de la première mâchoire 51 et cette vis d'actionnement 63, avec l'organe de liaison 53 situé sensiblement au milieu de l'embase 513, dans le premier plan médian PM1 en configuration serrée comme visible sur la Figure 3.

Aussi, la vis d'actionnement 63 et la vis de serrage 59 sont disposés sur un même côté vis-à-vis du premier plan médian PM1.

Ainsi, suivant le sens de rotation de la vis d'actionnement 63, cette dernière éloigne ou rapproche la seconde pièce biseautée 62, avec les effets susmentionnés relatifs à la variation des dimensions transversales. La vis d'actionnement 63 comporte une tige filetée traversant la portion latérale 513 de l'embase 513 pour coopérer avec l'orifice fileté 64 de la seconde pièce biseautée 62, et également une tête de vis conçue pour coopérer avec un outil de vissage et adaptée pour venir en appui contre la portion latérale 513 une fois les pièces biseautées 61, 62 verrouillées à l'intérieur du montant 3.

Ainsi, la tête de la vis d'actionnement 63 est facilement accessible pour un outil de vissage, simplifiant le montage et le démontage, tout comme pour la tête de la vis de serrage 59 située du même côté.

## Revendications

1. Dispositif de main courante (2) pour garde-corps (1), comprenant une lisse (4) prévue pour former une main courante et un étrier (5) prévu pour une fixation de la lisse (4) sur un montant (3),
dans lequel la lisse (4) s'étend selon un axe longitudinal (40) et présente une face périphérique externe (48) pourvue d'une portion inférieure (41) et d'une portion supérieure (42), et ladite lisse (4) présente deux plans médians (PM1, PM2) qui sont, lorsque la lisse (4) est en situation sur le garde-corps (1) avec l'axe longitudinal (40) à l'horizontal :
- un premier plan médian (PM1) incluant l'axe longitudinal (40) et s'étendant verticalement, où la lisse (4) présente une hauteur (H) donnée mesurée dans le premier plan médian (PM1) entre un point bas (410) sur la portion inférieure (41) et un point haut (420) sur la portion supérieure (42), et où l'axe longitudinal (40) se situe sensiblement à mi-distance du point haut (420) et du point bas (410) ; et
- un second plan médian (PM2) au-dessus duquel s'étend la portion supérieure (42) et en-dessous duquel s'étend la portion inférieure (41), où le second plan médian (PM2) inclue l'axe longitudinal (40) et s'étend horizontalement, orthogonalement au premier plan médian (PM1) ;
et dans lequel l'étrier (5) comprend deux mâchoires (51, 52) articulées et est configurable entre une configuration serrée dans laquelle les deux mâchoires (51, 52) enserrent une section de la lisse (4), et une configuration desserrée permettant l'introduction de la lisse (4) entre les deux mâchoires (51, 52) ;
ledit dispositif de main courante (2) étant **caractérisé en ce que** :
- la lisse (4) présente deux gorges longitudinales (43) prévues dans la portion inférieure (41) de la face périphérique externe (48), ces deux gorges longitudinales (43) s'étendant parallèlement à l'axe longitudinal (40) et étant disposées de part et d'autre du premier plan médian (PM1), en-dessous du second plan médian (PM2) ; et
- l'étrier (5), en configuration serrée, a ses deux mâchoires (51, 52) engagées au moins partiellement à l'intérieur des deux gorges longitudinales (43) respectives, ces deux mâchoires (51, 52) ne dépassant pas au-dessus du second plan médian (PM2).

2. Dispositif de main courante (2) selon la revendication 1, dans lequel les deux mâchoires (51, 52) comprennent :
- une première mâchoire (51) sur laquelle sont disposés des moyens de fixation (6) prévus pour une fixation sur le montant (3), de sorte que la première mâchoire (51) est statique ; et
- une seconde mâchoire (52) montée mobile sur la première mâchoire (51) entre la configuration desserrée et la configuration serrée.

3. Dispositif de main courante (2) selon la revendication 2, dans lequel la seconde mâchoire (52) est montée mobile en pivotement sur la première mâchoire (51) au moyen d'un organe de liaison (53) définissant un axe de pivotement parallèle à l'axe longitudinal (40) de la lisse (4).

4. Dispositif de main courante (2) selon l'une quelconque des revendications 2 et 3, dans lequel l'étrier (5) comportent des moyens de serrage agencés pour mouvoir la seconde mâchoire (52) entre la configuration desserrée et la configuration serrée et pour maintenir la seconde mâchoire (52) dans la configuration serrée.

5. Dispositif de main courante (2) selon la revendication 4, dans lequel les moyens de serrage comprennent :
- un orifice taraudé ménagé dans la première mâchoire (51),
- un orifice traversant ménagé dans la seconde mâchoire (52), et
- une vis de serrage (59) présentant, d'une part, une tige filetée traversant ledit orifice traversant et s'engageant par vissage dans ledit orifice taraudé et, d'autre part, une tête venant en butée contre une face postérieure de la seconde mâchoire (52).

6. Dispositif de main courante (2) selon l'une quelconque des revendications 2 à 5, dans lequel la première mâchoire (51) présente :
- un mors de serrage (510) définissant une face interne de serrage (511) prévue pour serrer la lisse (4) en s'engageant au moins partiellement à l'intérieur de l'une des deux gorges longitudinales (43) ; et
- une embase (513) solidaire du mors de serrage (510) et de laquelle fait saillie le mors de serrage (510), ladite embase (513) définissant une surface inférieure (514) s'étendant parallèlement au second plan médian (PM2) et prévue pour venir en appui sur une extrémité supérieure (31) du montant (3).

7. Dispositif de main courante (2) selon la revendication 6, dans lequel les moyens de fixation (6) font saillie du dessous de la surface inférieure (514) de l'embase (513) de la première mâchoire (51) et sont prévus pour s'engager à l'intérieur d'une ouverture (32) ménagée dans l'extrémité supérieure (31) du montant (3).

8. Dispositif de main courante (2) selon la revendication 7, dans lequel les moyens de fixation (6) comprennent :
- une première pièce biseautée (61) solidaire de l'embase (513) de la première mâchoire (51), et
- une seconde pièce biseautée (62) montée coulissante sur l'embase (513) relativement à la première biseautée ;
la première pièce biseautée (61) et la seconde pièce biseautée (62) étant en appui l'une contre l'autre par leurs surfaces inclinées (610, 620) respectives et conformées pour coulisser l'une par rapport à l'autre,
et dans lequel les deux dites pièces biseautées (61, 62) sont reliées entre elles par un moyen d'actionnement apte à entraîner en coulissement ladite seconde pièce biseautée (62) et à la verrouiller en position relativement à la première pièce biseautée (61) afin de maintenir un verrouillage des deux pièces biseautées (61, 62) en force par écartement à l'intérieur de l'ouverture (32) ménagée dans l'extrémité supérieure (31) du montant (3).

9. Dispositif de main courante (2) selon la revendication 8, dans lequel le moyen d'actionnement comprend un orifice fileté (64) ménagé dans la seconde pièce biseautée (62), et une vis d'actionnement (63) traversant l'embase (513) de la première mâchoire (51) pour coopérer par vissage avec ledit orifice fileté (64) pour déplacer ladite seconde pièce biseautée (62) en coulissement relativement à la première pièce biseautée (61) afin de rapprocher la seconde pièce biseautée (62) de l'embase (513) et ainsi verrouiller les pièces biseautées (61, 62) à l'intérieur de l'ouverture (32) ménagée dans l'extrémité supérieure (31) du montant (3).

10. Dispositif de main courante (2) selon les revendications 5 et 9, dans lequel l'embase (513) présente une portion latérale (515) s'étendant en regard de la face postérieure de la seconde mâchoire (52), de sorte que la vis d'actionnement (63) traverse cette portion latérale (515) pour que la vis d'actionnement (63) et la vis de serrage (59) soient disposés sur un même côté vis-à-vis du premier plan médian (PM1).

11. Dispositif de main courante (2) selon l'une quelconque des revendications précédentes, dans lequel les deux mâchoires (51, 52) présentent chacune une face interne de serrage (511 ; 521) se terminant par un crochet (512 ; 522) propre à s'engager intérieurement dans la gorge longitudinale (43) correspondante de la lisse (4) en configuration serrée.

12. Dispositif de main courante (2) selon la revendication 11, dans lequel la portion inférieure (41) de la face périphérique externe (48) de la lisse (4) présente une zone d'appui (44) s'étendant entre les deux gorges longitudinales (43), ladite zone d'appui (44) venant en appui sur les faces internes de serrage (511, 521) des deux mâchoires (51, 52) en configuration serrée.

13. Dispositif de main courante (2) selon l'une quelconque des revendications précédentes, dans lequel les gorges longitudinales (43) sont ménagées à une distance (D) prédéfinie, mesurée dans le premier plan médian (PM1) à partir du point bas (410), où cette distance (D) est inférieure ou égale à 0,3 fois la hauteur (H) de la lisse (4).

14. Garde-corps (1) comprenant un dispositif de main courante (2) selon l'une quelconque des revendications précédentes, et au moins un montant (3) muni d'une extrémité supérieure (31) sur laquelle est fixé l'étrier (5) du dispositif de main courante (2).

15. Garde-corps (1) selon la revendication 14, dans lequel l'extrémité supérieure (31) du montant (3) présente une ouverture (32) à l'intérieur de laquelle est fixé l'étrier (5).

## Patentansprüche

1. Handlaufvorrichtung (2) für Geländer (1), umfassend einen Holm (4), der zum Bilden eines Handlaufs vorgesehen ist, und einen Montagebügel (5), der zum Befestigen des Holms (4) an einem Pfosten (3) vorgesehen ist,
wobei sich der Holm (4) entlang einer Längsachse (40) erstreckt und eine Außenumfangsfläche (48) aufweist, die mit einem unteren Abschnitt (41) und einem oberen Abschnitt (42) versehen ist, und wobei der Holm (4) zwei Mittelebenen (PM1, PM2) aufweist, die Folgendes sind, wenn sich der Holm (4) mit der horizontalen Längsachse (40) auf dem Geländer (1) befindet:
- eine erste Mittelebene (PM1), die die Längsachse (40) enthält und sich vertikal erstreckt, wobei der Holm (4) eine bestimmte Höhe (H) aufweist, die in der ersten Mittelebene (PM1) zwischen einem Tiefpunkt (410) am unteren Abschnitt (41) und einem Hochpunkt (420) am oberen Abschnitt (42) gemessen wird, und wobei sich die Längsachse (40) im Wesentlichen auf halber Strecke zwischen dem Hochpunkt (420) und dem Tiefpunkt (410) befindet; und
- eine zweite Mittelebene (PM2), über der sich der obere Abschnitt (42) erstreckt und unter der sich der untere Abschnitt (41) erstreckt, wobei die zweite Mittelebene (PM2) die Längsachse (40) enthält und sich horizontal orthogonal zur ersten Mittelebene (PM1) erstreckt;
und wobei der Montagebügel (5) zwei gelenkige Backen (51, 52) umfasst und zwischen einer festgezogenen Konfiguration, in der die beiden Backen (51, 52) einen Teil des Holms (4) umklammern, und einer gelösten Konfiguration, die das Einführen des Holms (4) zwischen den beiden Backen (51, 52) ermöglicht, konfigurierbar ist;
wobei die Handlaufvorrichtung (2) **dadurch gekennzeichnet ist, dass**:
- der Holm (4) zwei Längsnuten (43) aufweist, die im unteren Abschnitt (41) der Außenumfangsfläche (48) vorgesehen sind, wobei sich die beiden Längsnuten (43) parallel zur Längsachse (40) erstrecken und auf beiden Seiten der ersten Mittelebene (PM1), unterhalb der zweiten Mittelebene (PM2) angeordnet sind; und
- der Montagebügel (5) in der festgezogenen Konfiguration beide Backen (51, 52) hat, die mindestens teilweise in die beiden Längsnuten (43) eingreifen, wobei die beiden Backen (51, 52) nicht über die zweite Mittelebene (PM2) hinausragen.

2. Handlaufvorrichtung (2) nach Anspruch 1, wobei die beiden Backen (51, 52) Folgendes umfassen:
- eine erste Backe (51), an der Befestigungsmittel (6) angeordnet sind, die für eine Befestigung am Pfosten (3) vorgesehen sind, so dass die erste Backe (51) statisch ist; und
- eine zweite Backe (52), die zwischen der gelösten Konfiguration und der festgezogenen Konfiguration beweglich an der ersten Backe (51) montiert ist.

3. Handlaufvorrichtung (2) nach Anspruch 2, wobei die zweite Backe (52) mittels eines Verbindungselements (53), das eine zur Längsachse (40) des Holms (4) parallele Schwenkachse definiert, schwenkbar an der ersten Backe (51) montiert ist.

4. Handlaufvorrichtung (2) nach einem der Ansprüche 2 und 3, wobei der Montagebügel (5) Klemmmittel umfasst, die so angeordnet sind, dass sie die zweite Backe (52) zwischen der gelösten Konfiguration und der festgezogenen Konfiguration bewegen und die zweite Backe (52) in der festgezogenen Konfiguration festhalten.

5. Handlaufvorrichtung (2) nach Anspruch 4, wobei die Klemmmittel Folgendes umfassen:
- ein Gewindeloch, das in der ersten Backe (51) ausgebildet ist,
- ein Durchgangsloch, das in der zweiten Backe (52) ausgebildet ist, und
- eine Spannschraube (59), die einerseits eine Gewindestange, die durch die Durchgangsöffnung verläuft und durch Einschrauben in die Gewindeöffnung eingreift, und andererseits einen Kopf aufweist, der an einer Rückfläche der zweiten Backe (52) zum Anliegen kommt.

6. Handlaufvorrichtung (2) nach einem der Ansprüche 2 bis 5, wobei die erste Backe (51) Folgendes aufweist:
- eine Klemmbacke (510), die eine innere Klemmfläche (511) definiert, die vorgesehen ist, um den Holm (4) festzuziehen, indem sie mindestens teilweise in eine der beiden Längsnuten (43) eingreift; und
- eine Basis (513), die fest mit der Klemmbacke (510) verbunden ist und von der die Klemmbacke (510) vorsteht, wobei die Basis (513) eine untere Oberfläche (514) definiert, die sich parallel zur zweiten Mittelebene (PM2) erstreckt und vorgesehen ist, um auf einem oberen Ende (31) des Pfostens (3) zum Anliegen zu kommen.

7. Handlaufvorrichtung (2) nach Anspruch 6, wobei die Befestigungsmittel (6) von unterhalb der unteren Oberfläche (514) der Basis (513) der ersten Backe (51) vorstehen und vorgesehen sind, um in eine im oberen Ende (31) des Pfostens (3) ausgebildete Öffnung (32) einzugreifen.

8. Handlaufvorrichtung (2) nach Anspruch 7, wobei die Befestigungsmittel (6) Folgendes umfassen:
- ein erstes abgeschrägtes Teil (61), das fest mit der Basis (513) der ersten Backe (51) verbunden ist, und
- ein zweites abgeschrägtes Teil (62), das relativ zum ersten abgeschrägten Teil verschiebbar auf der Basis (513) montiert ist;
wobei das erste abgeschrägte Teil (61) und das zweite abgeschrägte Teil (62) durch ihre jeweiligen geneigten Oberflächen (610, 620) aneinander zum Anliegen kommen und so geformt sind, dass sie relativ zueinander gleiten,
und wobei die beiden abgeschrägten Teile (61, 62) durch Betätigungsmittel miteinander verbunden sind, die dazu ausgelegt sind, das zweite abgeschrägte Teil (62) verschiebbar anzutreiben und es in einer Position relativ zum ersten abgeschrägten Teil (61) zu verriegeln, um eine Verriegelung der beiden abgeschrägten Teile (61, 62) durch Beabstandung innerhalb der im oberen Ende (31) des Pfostens (3) ausgebildete Öffnung (32) zwangsweise zu halten.

9. Handlaufvorrichtung (2) nach Anspruch 8, wobei das Betätigungsmittel eine im zweiten abgeschrägten Teil (62) ausgebildete Gewindeöffnung (64) und eine durch die Basis (513) der ersten Backe (51) verlaufende Betätigungsschraube (63) umfasst, um durch Schrauben mit der Gewindeöffnung (64) zusammenzuwirken, um den zweiten abgeschrägten Teil (62) relativ zum ersten abgeschrägten Teil (61) verschiebbar zu bewegen, um den zweiten abgeschrägten Teil (62) der Basis (513) näher zu bringen und somit die abgeschrägten Teile (61, 62) in der Öffnung (32), die im oberen Ende (31) des Pfostens (3) ausgebildet ist, zu verriegeln.

10. Handlaufvorrichtung (2) nach den Ansprüchen 5 und 9, wobei die Basis (513) einen seitlichen Abschnitt (515) aufweist, der sich gegenüber der Rückfläche der zweiten Backe (52) erstreckt, so dass die Betätigungsschraube (63) durch den seitlichen Abschnitt (515) verläuft, so dass die Betätigungsschraube (63) und die Klemmschraube (59) bezüglich der ersten Mittelebene (PM1) auf derselben Seite angeordnet sind.

11. Handlaufvorrichtung (2) nach einem der vorhergehenden Ansprüche, wobei die beiden Backen (51, 52) jeweils eine innere Klemmfläche (511; 521) aufweisen, die in einem Haken (512; 522) endet, der dazu geeignet ist, in festgezogener Konfiguration innen in die entsprechende Längsnut (43) des Holms (4) einzugreifen.

12. Handlaufvorrichtung (2) nach Anspruch 11, wobei der untere Abschnitt (41) der Außenumfangsfläche (48) des Holms (4) einen Stützbereich (44) aufweist, der sich zwischen den beiden Längsnuten (43) erstreckt, wobei die Stützbereiche (44) in festgezogener Konfiguration an den inneren Klemmflächen (511, 521) der beiden Backen (51, 52) zum Anliegen kommen.

13. Handlaufvorrichtung (2) nach einem der vorhergehenden Ansprüche, wobei die Längsnuten (43) in einem vordefinierten Abstand (D), der in der ersten Mittelebene (PM1) vom Tiefpunkt (410) aus gemessen wird, vorgesehen sind, wobei der Abstand (D) kleiner oder gleich dem 0,3-Fachen der Höhe (H) des Holms (4) ist.

14. Geländer (1), das eine Handlaufvorrichtung (2) nach einem der vorhergehenden Ansprüche und mindestens einen Pfosten (3) umfasst, der mit einem oberen Ende (31) versehen ist, an dem der Montagebügel (5) der Handlaufvorrichtung (2) befestigt ist.

15. Geländer (1) nach Anspruch 14, wobei das obere Ende (31) des Pfostens (3) eine Öffnung (32) aufweist, in der der Montagebügel (5) befestigt ist.

## Claims

1. A handrail device (2) for guardrail (1), comprising a rail (4) provided to form a handrail and a clamp (5) provided for fixing the rail (4) to an upright (3),
wherein the rail (4) extends along a longitudinal axis (40) and has an outer peripheral face (48) provided with a lower portion (41) and an upper portion (42), and said rail (4) has two median planes (PM1, PM2) which are, when the rail (4) is in situation on the guardrail (1) with the longitudinal axis (40) to the horizontal:
- a first median plane (PM1) including the longitudinal axis (40) and extending vertically, where the rail (4) has a given height (H) measured in the first median plane (PM1) between a low point (410) on the lower portion (41) and a high point (420) on the upper portion (42), and where the longitudinal axis (40) is located approximately halfway between the high point (420) and the low point (410); and
- a second median plane (PM2) above which the upper portion (42) extends and below which the lower portion (41) extends, where the second median plane (PM2) includes the longitudinal axis (40) and extends horizontally, orthogonal to the first median plane (PM1);
and wherein the clamp (5) comprises two articulated claws (51, 52) and is configurable between a tight configuration wherein the two claws (51, 52) grip a section of the rail (4), and a loose configuration allowing the introduction of the rail (4) between the two claws (51, 52);
said handrail device (2) being **characterized in that**:
- the rail (4) has two longitudinal grooves (43) provided in the lower portion (41) of the outer peripheral face (48), these two longitudinal grooves (43) extending parallel to the longitudinal axis (40) and being arranged on either side of the first median plane (PM1), below the second median plane (PM2); and
- the clamp (5), in the tight configuration, has its two claws (51, 52) engaged at least partially inside the two respective longitudinal grooves (43), these two claws (51, 52) not protruding above of the second median plane (PM2).

2. The handrail device (2) according to claim 1, wherein the two claws (51, 52) comprise:
- a first claw (51) on which are arranged fixing means (6) provided for a fixing on the upright (3), so that the first claw (51) is static; and
- a second claw (52) movably mounted on the first claw (51) between the loose configuration and the tight configuration.

3. The handrail device (2) according to claim 2, wherein the second claw (52) is pivotally mounted on the first claw (51) by means of a connecting member (53) defining a pivot axis parallel to the longitudinal axis (40) of the rail (4).

4. The handrail device (2) according to any one of claims 2 and 3, wherein the clamp (5) includes clamping means arranged to move the second claw (52) between the loose configuration and the tight configuration and to hold the second claw (52) in the tight configuration.

5. The handrail device (2) according to claim 4, wherein the clamping means comprise:
- a threaded hole provided in the first claw (51),
- a through hole provided in the second claw (52), and
- a clamping screw (59) having, on the one hand, a threaded rod passing through said through orifice and being engaged by screwing into said tapped orifice and, on the other hand, a head abutting against a rear face of the second claw (52).

6. The handrail device (2) according to any one of claims 2 to 5, wherein the first claw (51) has:
- a clamping jaw (510) defining an inner clamping face (511) provided to tighten the rail (4) by being engaged at least partially inside one of the two longitudinal grooves (43); and
- a base (513) secured to the clamping jaw (510) and from which the clamping jaw (510) projects, said base (513) defining a lower surface (514) extending parallel to the second median plane (PM2) and designed to bear on an upper end (31) of the upright (3).

7. The handrail device (2) according to claim 6, wherein the fixing means (6) project from below the lower surface (514) of the base (513) of the first claw (51) and are provided to be engaged inside an opening (32) formed in the upper end (31) of the upright (3).

8. The handrail device (2) according to claim 7, wherein the fixing means (6) comprise:
- a first beveled part (61) secured to the base (513) of the first claw (51), and
- a second beveled part (62) slidably mounted on the base (513) relative to the first beveled part;
the first beveled part (61) and the second beveled part (62) being born against each other by their respective inclined surfaces (610, 620) and shaped to slide relative to each other,
and wherein the two said beveled parts (61, 62) are connected together by an actuating means capable of slidably drive said second beveled part (62) and locking it in position relative to the first beveled part (61) in order to maintain a locking of the two beveled parts (61, 62) in force by spacing inside the opening (32) formed in the upper end (31) of the upright (3).

9. The handrail device (2) according to claim 8, wherein the actuation means comprises a threaded orifice (64) formed in the second beveled part (62), and an actuation screw (63) passing through the base (513) of the first claw (51) to cooperate by screwing with said threaded orifice (64) to move said second beveled part (62) in sliding relative to the first beveled part (61) in order to bring the second beveled part (62) of the base (513) and thus lock the beveled parts (61, 62) inside the opening (32) made in the upper end (31) of the upright (3).

10. The handrail device (2) according to claims 5 and 9, wherein the base (513) has a lateral portion (515) extending opposite the rear face of the second claw (52), so that the actuation screw (63) passes through this lateral portion (515) so that the actuation screw (63) and the clamping screw (59) are arranged on the same side opposite the first median plane (PM1).

11. The handrail device (2) according to any one of the preceding claims, wherein the two claws (51, 52) each have an inner clamping face (511; 521) ending in a hook (512; 522) capable of being engaged internally in the corresponding longitudinal groove (43) of the rail (4) in tight configuration.

12. The handrail device (2) according to claim 11, wherein the lower portion (41) of the outer peripheral face (48) of the rail (4) has a support zone (44) extending between the two longitudinal grooves (43), said support zone (44) bearing on the inner clamping faces (511, 521) of the two claws (51, 52) in tight configuration.

13. The handrail device (2) according to any one of the preceding claims, wherein the longitudinal grooves (43) are provided at a predefined distance (D), measured in the first median plane (PM1) from the low point (410), where this distance (D) is less than or equal to 0.3 times the height (H) of the rail (4).

14. A guardrail (1) comprising a handrail device (2) according to any one of the preceding claims, and at least one upright (3) provided with an upper end (31) on which the clamp (5) of the handrail device (2) is fixed.

15. The guardrail (1) according to claim 14, wherein the upper end (31) of the upright (3) has an opening (32) inside which the clamp (5) is fixed.
